# EUROPEAN PATENT SPECIFICATION

(11) **EP 4 296 096 B1**
(45) Date of publication and mention of the grant of the patent: **13.08.2025**
(21) Application number: 22823913.3
(22) Date of filing: 26.04.2022
(51) Int. Cl.: B60H 1/00, B60L 58/27, B60L 58/34, B60H 1/14, B60H 1/22, H01M 8/04029, H01M 10/48, H01M 10/615, H01M 10/625, H01M 10/63, H01M 16/00

(54) **THERMAL MANAGEMENT SYSTEM FOR FUEL CELL HYBRID ELECTRIC VEHICLE, METHOD, VEHICLE AND MEDIUM**
WÄRMEVERWALTUNGSSYSTEM FÜR EIN BRENNSTOFFZELLEN-HYBRIDELEKTROFAHRZEUG, VERFAHREN, FAHRZEUG UND MEDIUM
SYSTÈME DE GESTION THERMIQUE POUR VÉHICULE ÉLECTRIQUE HYBRIDE À PILE À COMBUSTIBLE, PROCÉDÉ, VÉHICULE ET SUPPORT

(30) Priority: 18.06.2021 CN 202110675916
(43) Date of publication of application: 27.12.2023
(73) Proprietor: China Faw Co., Ltd., Changchun, Jilin 130011 (CN)
(72) Inventor: YIN, Jiankun, Changchun, Jilin 130011 (CN); MA, Yanhong, Changchun, Jilin 130011 (CN)
(74) Representative: Grassi, Stefano
(86) International application number: PCT/CN2022/089156
(87) International publication number: WO 2022/262428

(56) References cited:
- EP-A1- 4 296 096
- WO-A1-2023/083127
- CN-A- 110 380 084
- CN-A- 110 979 102
- CN-A- 112 277 569
- CN-A- 112 928 303
- CN-A- 112 956 057
- CN-A- 113 246 807
- CN-A- 113 978 274
- CN-A- 114 347 751
- CN-A- 114 347 751
- CN-U- 210 680 462
- US-A1- 2010 092 822
- US-A1- 2020 298 663

## Description

### Cross-Reference to Related Application

The present invention claims the priority of Chinese Patent Application 202110675916.7, filed in the China Patent Office on June 18, 2021.

### Technical Field

The present invention relates to the technical field of thermal management of vehicles, in particular to a thermal management system and method for a fuel cell hybrid electric vehicle, a vehicle and a medium.

### Background

A fuel cell hybrid electric vehicle has two power sources, that is, a fuel cell engine and a power battery. The fuel cell engine has very low conversion efficiency in a low-temperature environment, and thus needs to be warmed up. The discharge power of the power battery in the low-temperature environment is also very low, and especially when the state of charge of the battery is relatively low, the influence of the temperature on the discharge capability of the battery is very large. In addition, on the fuel cell hybrid vehicle, hot air conditioners with positive temperature coefficients (Positive Temperature Coefficients, PTCs) are generally used for providing warm air for drivers, therefore the economical efficiency of this heating mode is worse. A fuel cell hybrid electric vehicle and a thermal management according to the state of the art is disclosed in CN110979102A.

### Summary

The present invention as defined in the independent claims 1 and 4 provides a thermal management system and method for a fuel cell hybrid electric vehicle, a vehicle and a medium, which system may warm up a fuel cell engine and a power battery, thereby improving the efficiency of the fuel cell engine and the power battery, and also improving the economical efficiency of the heating mode of an air conditioner.

Claim 1 describes a thermal management system for a fuel cell hybrid electric vehicle, including:
a galvanic pile cooling and heating loop, a battery cooling and heating loop, a heating loop and a refrigerating loop;
the galvanic pile cooling and heating loop comprises a radiator, a thermostat, a galvanic pile water pump, a galvanic pile and a galvanic pile temperature sensor, the thermostat comprises a liquid inlet C, a liquid outlet A and a liquid outlet B, the liquid outlet A is connected with an inlet of the radiator, an outlet of the radiator is connected with the inlet of the galvanic pile water pump, and a branch is lead out from the liquid outlet *B* to be connected between the radiator and the galvanic pile water pump; the radiator is configured with a cooling fan, which is configured to blow air to the radiator; the outlet of the galvanic pile water pump is connected with a cooling liquid inlet of the galvanic pile, a cooling liquid outlet of the galvanic pile is connected with the liquid inlet C of the thermostat, and the galvanic pile temperature sensor is configured between the galvanic pile and the thermostat;
the battery cooling and heating loop comprises a battery, a battery water pump, a battery temperature sensor and a battery three-way valve, which are connected in sequence;
the heating loop comprises a hydrogen combustion heater, a warm air core body, a heating loop rear-end temperature sensor, a heating three-way valve, a heating water pump, a heat exchanger and a heating loop front-end temperature sensor, which are connected in sequence;
the refrigerating loop comprises an air conditioner and a cooler, and the air conditioner are connected with the cooler , and the cooler is configured to exchange heat with the battery cooling and heating loop;
wherein the battery three-way valve comprises an interface A, an interface B and an interface C, the interface B of the battery three-way valve and the interface C of the battery three-way valve are connected in the battery cooling and heating loop, the interface A of the battery three-way valve is connected with an outlet on the side of the heat exchanger that is not connected with the heating loop, an inlet on the side of the heat exchanger that is not connected with the heating loop is connected between the battery temperature sensor and the interface B of the battery three-way valve;
the heating three-way valve comprises an interface A, an interface B and an interface C, the interface A of the heating three-way valve and the interface B of the heating three-way valve are connected in the heating loop, the interface C of the heating three-way valve is connected between the galvanic pile temperature sensor and the thermostat, a branch is lead out between the heating loop rear-end temperature sensor and the interface A of the heating three-way valve, the branch is connected with the liquid inlet C of the thermostat, and a connection point between the interface A of the heating three-way valve and the galvanic pile cooling and heating loop is closer to the thermostat than a connection point between the interface C of the heating three-way valve and the galvanic pile cooling and heating loop.

In preferred embodiments of the thermal management system for the fuel cell hybrid electric vehicle, the thermal management system for the fuel cell hybrid electric vehicle further includes the additional features of the dependent claims:
a vehicle control unit, VCU, configured to control the cooling fan, the thermostat, the galvanic pile water pump, the heating three-way valve, the heating water pump and the hydrogen combustion heater;
a battery management system, BMS, configured to control the battery water pump and the battery three-way valve;
an air-conditioning controller, configured to control an air speed of the warm air core body and control the cooler to cool the battery in response to overheating of the battery ;
a fuel cell control unit, FCCU, configured to control a hydrogen supply of the galvanic pile and the hydrogen supply of the hydrogen combustion heater.

As a solution of the thermal management system for the fuel cell hybrid electric vehicle, both the galvanic pile and the hydrogen combustion heater are connected with a hydrogen cylinder, a first electromagnetic valve is configured between the hydrogen combustion heater and the hydrogen cylinder, and a second electromagnetic valve is configured between the galvanic pile and the hydrogen cylinder.

Claim 4 describes a thermal management method for a fuel cell hybrid electric vehicle, configured to the above-mentioned thermal management system for the fuel cell hybrid electric vehicle, including:
determining whether the air conditioner has a warm air request;
in response to the air conditioner having no warm air request, and the battery temperature being less than a battery temperature threshold value *Th1* in a warm-up mode, or the temperature of cooling liquid of the galvanic pile being less than a galvanic pile temperature threshold value *Th2* in the warm-up mode, controlling the thermal management system for the fuel cell hybrid electric vehicle to enter a warm-up mode;
in response to the air conditioner having no warm air request, and the battery temperature being greater than or equal to the battery temperature threshold value *Th1* in the warm-up mode, and the temperature of the cooling liquid of the galvanic pile being greater than or equal to the galvanic pile temperature threshold value *Th2* in the warm-up mode, controlling the thermal management system for the fuel cell hybrid electric vehicle to enter a normal cooling mode;
in response to the air conditioner having the warm air request, and the battery temperature being greater than a battery temperature upper limit value *Th3* in the warm-up mode, and the temperature of the cooling liquid of the galvanic pile being greater than a galvanic pile temperature upper limit value *Th4* in the warm-up mode, controlling the thermal management system for the fuel cell hybrid electric vehicle to enter a normal air-conditioning mode;
in response to the air conditioner having the warm air request, the battery temperature being less than or equal to the battery temperature upper limit value *Th3* in the warm-up mode, or the temperature of the cooling liquid of the galvanic pile being less than or equal to the galvanic pile temperature upper limit value *Th4* in the warm-up mode, controlling the thermal management system for the fuel cell hybrid electric vehicle to enter an air-conditioning warm-up mode.

In preferred embodiments of of the thermal management method for the fuel cell hybrid electric vehicle, in response to the thermal management system for the fuel cell hybrid electric vehicle being controlled to enter the warm-up mode includes the additional features of the dependent claims:
the vehicle control unit, VCU controls the hydrogen combustion heater (201) to enter a working state, calculates a hydrogen inflow of the hydrogen combustion heater (201) based on a battery temperature reported by the battery management system, BMS, the temperature of a galvanic pile loop reported by the fuel cell control unit, FCCU, and the pressure of the hydrogen cylinder, converts the hydrogen inflow into a duty ratio signal of the first electromagnetic valve (401), and sends the duty ratio signal to the FCCU; the FCCU controls the duty ratio of the first electromagnetic valve (401) to control the gas inflow of the hydrogen combustion heater (201); the VCU controls the thermostat (103) to turn on the BC direction of the thermostat (103) and turn off the A direction thereof, and controls the heating three-way valve (203) to turn on the BC direction thereof and turn off the A direction thereof; the heating water pump (204), the galvanic pile water pump (104) and the battery water pump (302) are all in the working state; turn on the AC direction of the battery three-way valve (304), and turn off the B direction thereof; and the air-conditioning controller, AC, controls the air conditioner to enter a non-working state.

As a solution of the thermal management method for the fuel cell hybrid electric vehicle, in response to the thermal management system for the fuel cell hybrid electric vehicle being controlled to enter the air-conditioning warm-up mode:
the VCU controls the hydrogen combustion heater (201) to enter the working state, calculates a hydrogen inflow of the hydrogen combustion heater (201) based on a battery temperature reported by the BMS, the temperature of the galvanic pile loop reported by the FCCU, a target temperature *Tac* of the air conditioner and the pressure of the hydrogen cylinder, converts the hydrogen inflow into a duty ratio signal of the first electromagnetic valve (401), and sends the duty ratio signal to the FCCU; the FCCU controls the duty ratio of the first electromagnetic valve (401) to control the gas inflow of the hydrogen combustion heater (201); the VCU controls the thermostat (103) to turn on the BC direction of the thermostat (103) and turn off the A direction thereof; turn on the BC direction of the heating three-way valve (203), and turn off the A direction thereof; the heating water pump (204), the galvanic pile water pump (104) and the battery water pump (302) are all in the working state; turn on the AC direction of the battery three-way valve (304), and turn off the B direction thereof; the air-conditioning controller, AC, controls the air conditioner to enter a warm air mode; and the warm air core body (202) blows out the heat generated by the hydrogen combustion heater (201) to warm a driver.

As a solution of the thermal management method for the fuel cell hybrid electric vehicle, in response to the thermal management system for the fuel cell hybrid electric vehicle being controlled to enter the normal air-conditioning mode:
in this mode, both the fuel cell galvanic pile and the battery are warmed up, the vehicle control unit, VCU, determines the working state of the heating three-way valve, the working state of the hydrogen combustion heater and the working states of a plurality of water pumps based on whether the galvanic pile works, a temperature *T106* reported by the galvanic pile temperature sensor, the target temperature *Tac* of the air conditioner, and a temperature *T207* reported by the heating loop rear-end temperature sensor:
   1) in response to the fuel cell galvanic pile does not work, and T106≥Tac, the VCU controls the galvanic pile water pump to enter the working state, turning on the BC direction of the heating three-way valve and turning off the direction A thereof, the heating water pump works, and the hydrogen combustion heater is in a shutdown mode;
   2) in response to the fuel cell galvanic pile does not work, and T106<Tac, the VCU controls the galvanic pile water pump to enter a disconnected state, turning off the C direction of the heating three-way valve and turning on the AB direction thereof, the heating water pump works, and the hydrogen combustion heater is in a working mode;
   3) in response to the fuel cell galvanic pile working, and T106≥Tac, the VCU controls the galvanic pile water pump to enter the working state, turning on the BC direction of the heating three-way valve and turning off the direction A thereof, the heating water pump works, and the hydrogen combustion heater is in the shutdown mode;
   4) in response to the fuel cell galvanic pile working, and T106<Tac, the VCU controls the galvanic pile water pump to enter the disconnected state, turning on the AB direction of the heating three-way valve and turning off the C direction thereof, the heating water pump works, and the hydrogen combustion heater is in the working mode;
   5) in response to the fuel cell galvanic pile working, T106<Tac and T106< T207, the VCU controls the galvanic pile water pump to enter the working state, turning off the C direction of the heating three-way valve and turning on the AB direction thereof, the heating water pump works, and the hydrogen combustion heater is in the working mode;
in the normal air-conditioning mode, the BMS controls the AC direction of the battery three-way valve (304) to be turned on and the B end thereof to be turned off, in response to the battery temperature being lower than a certain value *Tbat1,* the BMS controls the rotation speed of the battery water pump (302) to linearly change within a certain value, and in response to the battery temperature being greater than a certain value *Tbat2,* the battery is cooled by the refrigeration of the air conditioner, the BMS controls the BC direction of the battery three-way valve (304) to be turned on and the A end thereof to be turned off, and the battery water pump (302) is in a maximum rotation speed working state.

As a solution of the thermal management method for the fuel cell hybrid electric vehicle, in response to the thermal management system for the fuel cell hybrid electric vehicle being controlled to enter the normal cooling mode:
in this mode, the fuel cell galvanic pile and the battery are both warmed up, and the air conditioner has no warm air requirement, the VCU controls the AB direction of the heating three-way valve to be turned on and the C end thereof to be turned off; the heating water pump does not work; controlling the rotation speed of the galvanic pile water pump (104) and the rotation speed of the cooling fan based on whether the galvanic pile works and the temperature reported by the galvanic pile temperature sensor; the BMS controls the AC direction of the battery three-way valve to be turned on and the B end thereof to be turned off; and in response to the battery temperature being lower than a certain value *Tbat1,* the BMS controls the rotation speed of the battery water pump to linearly change within a certain value, and in response to the battery temperature being greater than a certain value *Tbat2,* cooling the battery by the refrigeration of the air conditioner, the battery management system, BMS, controls the BC direction of the battery three-way valve to be turned on and the A end thereof to be turned off, and the battery water pump is in the maximum rotation speed working state.

A vehicle is defined in claim 9, and a computer-readable storage medium is defined in claim 10.

### Brief Description of the Drawings

Fig. 1 is a schematic structural diagram of an embodiment of a thermal management system for a fuel cell hybrid electric vehicle according to an embodiment of the present invention;
Fig. 2 is a schematic diagram of a control portion of a thermal management system for a fuel cell hybrid electric vehicle according to an embodiment of the present invention;
Fig. 3 is a schematic diagram of a connection among a hydrogen combustion heater, a fuel cell galvanic pile and a hydrogen cylinder according to an embodiment of the present invention;
Fig. 4 is a flowchart of a thermal management method for a fuel cell hybrid electric vehicle according to an embodiment of the present invention.

101. Radiator; 102. Cooling fan; 103. Thermostat; 104. Galvanic pile water pump; 105. Galvanic pile; 106. Galvanic pile temperature sensor; 201. Hydrogen combustion heater; 202. Warm air core body; 203. Heating three-way valve; 204. Heating water pump; 205. Heat exchanger; 206. Heating loop front-end temperature sensor; 207. Heating loop rear-end temperature sensor; 301. Battery temperature sensor; 302. Battery water pump; 303. cooler; 304. Battery three-way valve; 305. Battery; 306. Air conditioner; 401. First electromagnetic valve; 402. Second electromagnetic valve.
1 Water temperature of a heating loop; 2 Water temperature of a front end of the heating loop; 3 Battery temperature; 4 Hydrogen surplus; 5 Temperature of a galvanic pile loop; 6 Battery cooling request; 7 Control of a battery cooling water pump; 8 Control of a battery three-way valve; 9 Control of a cooling fan; 10 Control of an electronic thermostat; 11 Control of a water pump of the galvanic pile loop; 12 Control of a water pump of the heating loop; 13 Control of a three-way valve of the heating loop; 14 Control of a hydrogen combustion heater; 15 Control of a hydrogen valve of the hydrogen combustion heater; 16 Target temperature of an air conditioner; 17 Water temperature of a rear end of the heating loop.

### Detailed Description

The technical solutions in the embodiments of the present invention will be described below in combination with the drawings in the embodiments of the present invention.

In order to conveniently describe the technical solutions of the embodiments of the present invention, in the embodiments of the present invention, terms such as "first" and "second" are taken for distinguishing the same or similar items, which basically have the same functions and effects. Those skilled in the art can understand that, the terms such as "first" and "second" do not limit the number or the execution order, and the terms such as "first" and "second" do not limit a certain difference.

### Embodiment 1

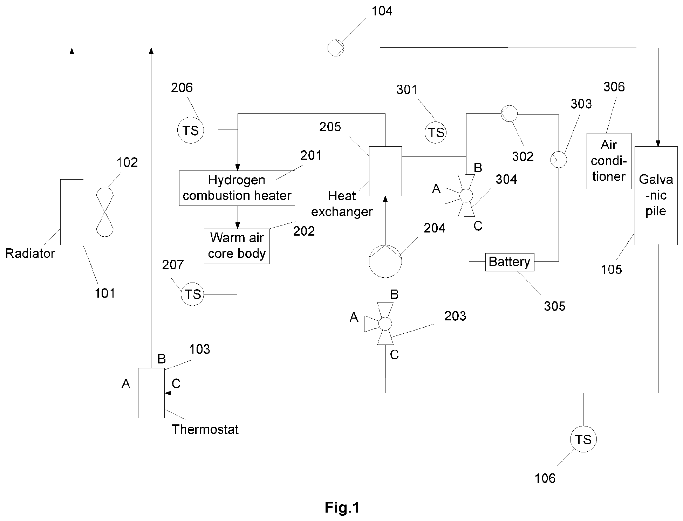

Embodiment 1 of the present invention provides a thermal management system for a fuel cell hybrid electric vehicle. As shown in Fig. 1, the thermal management system for the fuel cell hybrid electric vehicle includes: a galvanic pile cooling and heating loop, a battery cooling and heating loop, a heating loop and a refrigerating loop.

The galvanic pile cooling and heating loop includes a radiator 101, a thermostat 103, a galvanic pile water pump 104, a galvanic pile 105 and a galvanic pile temperature sensor 106, which are connected in sequence, and the radiator 101 is provided with a cooling fan 102, which is configured to blow air to the radiator 101. The thermostat 103 includes a liquid inlet C, a liquid outlet A and a liquid outlet B, the liquid outlet A of the thermostat 103 is connected with an inlet of the radiator 101, an outlet of the radiator 101 is connected with the inlet of the galvanic pile water pump 104, and a branch is lead out from the liquid outlet B of the thermostat 103 to be connected to a rear end of the radiator 101, the rear end of the radiator 101 is between the radiator 101 and the galvanic pile water pump 104, the outlet of the galvanic pile water pump 104 is connected with a cooling liquid inlet of the galvanic pile 105, a cooling liquid outlet of the galvanic pile 105 is connected with the liquid inlet C of the thermostat 103, and the galvanic pile temperature sensor 106 is configured between the galvanic pile 105 and the thermostat 103 to detect the temperature of the galvanic pile cooling and heating loop.

The battery cooling and heating loop includes a battery 305, a battery water pump 302, a battery three-way valve 304 and a battery temperature sensor 301, which are connected in sequence. The battery three-way valve 304 includes an interface A, an interface B and an interface C, the interface C of the battery three-way valve 304 is connected with the cooling liquid inlet of the battery 305, the cooling liquid outlet of the battery 305 is connected with the inlet of the battery water pump 302, the outlet of the battery water pump 302 is connected with the interface B of the battery three-way valve 304, and the battery temperature sensor 301 is disposed on the rear end of the outlet of the battery water pump 302 to detect the temperature of the battery cooling and heating loop.

The heating loop includes a hydrogen combustion heater 201, a warm air core body 202, a heating loop rear-end temperature sensor 207, a heating three-way valve 203, a heating water pump 204, a heat exchanger 205 and a heating loop front-end temperature sensor 206, which are connected in sequence. The hydrogen combustion heater 201 is connected with the warm air core body 202, the heating three-way valve 203 includes an interface A, an interface B and an interface C, the warm air core body 202 is connected with the interface A of the heating three-way valve 203, the interface B of the heating three-way valve 203 is connected with the inlet of the heating water pump 204, the outlet of the heating water pump 204 is connected with the inlet of the heat exchanger 205, the outlet of the heat exchanger 205 is connected with the hydrogen combustion heater 201, the heating loop front-end temperature sensor 206 is disposed between the heat exchanger 205 and the hydrogen combustion heater 201, and the heating loop rear-end temperature sensor 207 is disposed between the warm air core body 202 and the interface A of the heating three-way valve 203. The interface C of the heating three-way valve 203 is connected to the rear end of the galvanic pile temperature sensor 106, that is, connected between the galvanic pile temperature sensor 106 and the thermostat 103, a branch is lead out between the heating loop rear-end temperature sensor 207 and the interface A of the heating three-way valve 203, so as to be connected to the front end of the liquid inlet C of the thermostat 103, and a connection point thereof is behind a connection point between the interface C of the heating three-way valve 203 and the galvanic pile cooling and heating loop.

The refrigerating loop includes an air conditioner 306 and a cooler 303, which are connected with each other, and as shown in Fig. 1, the cooler 303 is further connected with the battery cooling and heating loop to exchange heat with the battery cooling and heating loop, thereby cooling the battery by means of the air conditioner.

The battery cooling and heating loop and the heating loop are connected and exchange heat by means of the heat exchanger 205. As shown in Fig. 1, one side of the heat exchanger 205 is connected in the heating loop, and the other side thereof is connected in the battery cooling and heating loop. The inlet on the side of the heat exchanger 205 that is connected with the battery cooling and heating loop is connected between the battery temperature sensor 301 and the interface B of the battery three-way valve 304 (between the battery temperature sensor 301 and the interface B of the battery three-way valve 304 is the front end of the interface B of the battery three-way valve 304), and the outlet on the side of the heat exchanger 205 that is connected with the battery cooling and heating loop is connected with the interface A of the battery three-way valve 304.

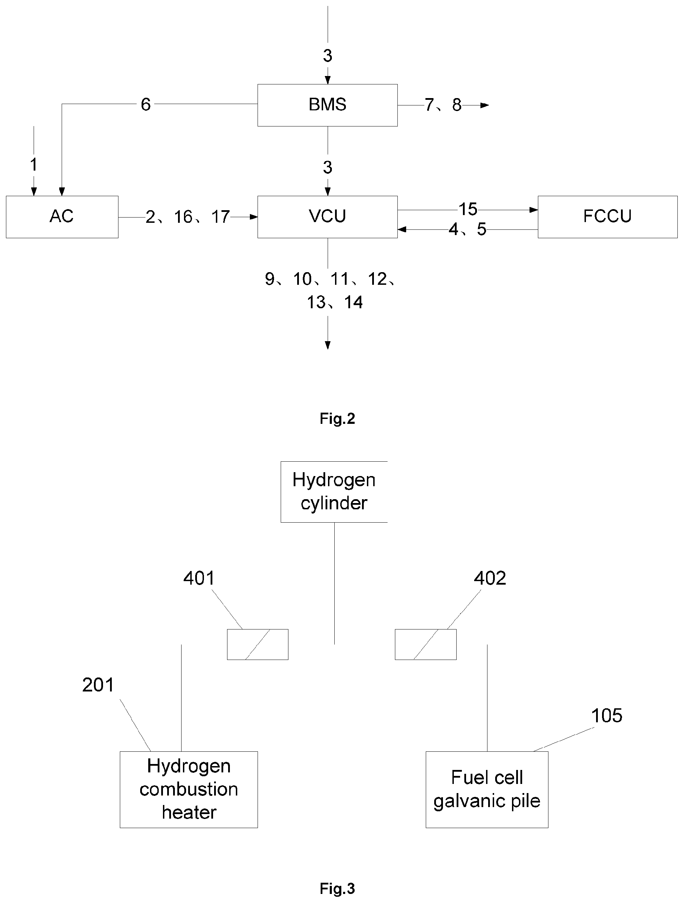

Referring to Fig. 2, in one embodiment, the thermal management system for the fuel cell hybrid electric vehicle further includes a vehicle control unit, VCU, a battery management system, BMS, an air-conditioning controller, AC, and a fuel cell control unit, FCCU.

The vehicle control unit, VCU is configured to control the cooling fan 102, the thermostat 103, the galvanic pile water pump 104, the heating three-way valve 203, the heating water pump 204 and the hydrogen combustion heater 201. An input signal of the vehicle control unit, VCU, includes a heating loop front-end temperature signal, a heating loop rear-end temperature signal and a target temperature of the air conditioner, which are reported by the air-conditioning controller, AC, to the vehicle control unit, VCU, the temperature of the battery cooling and heating loop reported by the battery management system, BMS, and a hydrogen surplus and the temperature of the galvanic pile cooling and heating loop, which are reported by the fuel cell control unit, FCCU; and in addition, the vehicle control unit, VCU, sends, to the fuel cell control unit, FCCU, a control instruction for a hydrogen valve of the hydrogen combustion heater 201.

The battery management system, BMS, is configured to control the battery water pump 302 and the battery three-way valve 304. The input signal of the battery management system, BMS, mainly includes the temperature of the battery cooling and heating loop, which is reported by the battery temperature sensor 301, which sends a battery cooling request to the air-conditioning controller, AC.

The air-conditioning controller, AC is configured to control the air speed of the warm air core 202, and is configured to control the cooler 303 to cool the battery in the case of overheat of the battery; and the fuel cell control unit, FCCU, is configured to control the hydrogen supply of the galvanic pile 105 and the hydrogen supply of the hydrogen combustion heater 201. The fuel cell control unit, FCCU, provides a pressure signal (the signal indicates the amount of hydrogen in a hydrogen cylinder) of the hydrogen cylinder for the vehicle control unit, VCU, and receives and executes a control instruction of the vehicle control unit, VCU, for controlling the electromagnetic valve of the hydrogen combustion heater 201.

Fig. 3 is a schematic diagram of a connection among the hydrogen combustion heater, the fuel cell galvanic pile and the hydrogen cylinder provided in an embodiment of the present invention. As shown in Fig. 3, both the galvanic pile 105 and the hydrogen combustion heater 201 are connected with the hydrogen cylinder, and the hydrogen cylinder is connected with the hydrogen combustion heater 201 and the fuel cell galvanic pile through two electromagnetic valves. A first electromagnetic valve 401 is configured between the hydrogen combustion heater 201 and the hydrogen cylinder, and a second electromagnetic valve 402 is configured between the galvanic pile 105 and the hydrogen cylinder. The first electromagnetic valve 401 and the second electromagnetic valve 402 are electrically controlled proportional valves, and the fuel cell control unit, FCCU, controls the duty ratios of the first electromagnetic valve 401 and the second electromagnetic valve 402 according to the pressure of the hydrogen cylinder, so as to control the hydrogen inflow entering the hydrogen combustion heater 201 and the fuel cell galvanic pile.

### Embodiment 2

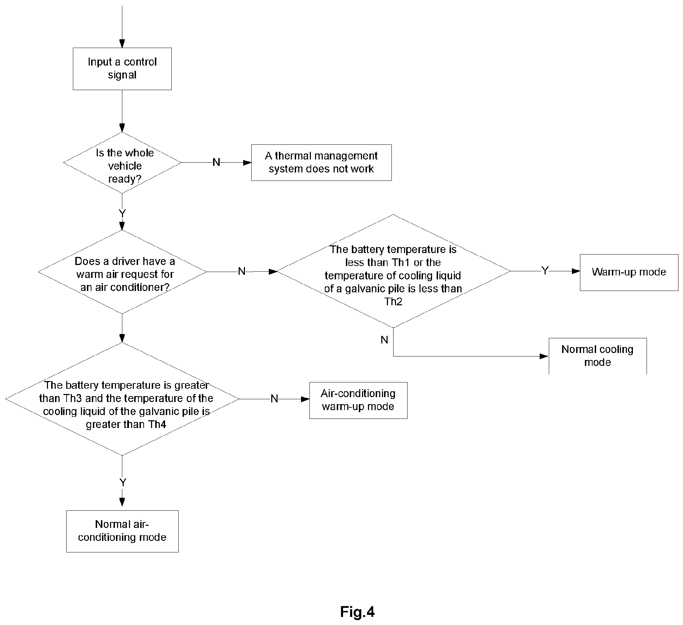

Based on the thermal management system for the fuel cell hybrid electric vehicle, the present invention further provides a thermal management method for a fuel cell hybrid electric vehicle, Fig. 4 is a flowchart of a thermal management method for a fuel cell hybrid electric vehicle provided according to an embodiment of the present invention, and the meanings of parameters in Fig. 4 are:
BatTemp: battery temperature; FcTemp: the temperature of cooling liquid of the galvanic pile; Th1: battery temperature threshold value in a warm-up mode; Th2: galvanic pile temperature threshold value in the warm-up mode; Th3: battery temperature upper limit value in the warm-up mode; and Th4: galvanic pile temperature upper limit value in the warm-up mode.

As shown in Fig. 4, the thermal management method for the fuel cell hybrid electric vehicle includes the following steps:
determining whether the air conditioner has a warm air request;
if the air conditioner has no warm air request, and the battery temperature is less than the battery temperature threshold value Th1 in the warm-up mode or the temperature of the cooling liquid of the galvanic pile is less than the galvanic pile temperature threshold value Th2 in the warm-up mode, controlling the thermal management system for the fuel cell hybrid electric vehicle to enter the warm-up mode; if the air conditioner has no warm air request, the battery temperature is greater than or equal to the battery temperature threshold value Th1 in the warm-up mode, and the temperature of the cooling liquid of the galvanic pile is greater than or equal to the galvanic pile temperature threshold value Th2 in the warm-up mode, controlling the thermal management system for the fuel cell hybrid electric vehicle to enter a normal cooling mode; if the air conditioner has the warm air request, the battery temperature is greater than the battery temperature upper limit value Th3 in the warm-up mode, and the temperature of the cooling liquid of the galvanic pile is greater than the galvanic pile temperature upper limit value Th4 in the warm-up mode, controlling the thermal management system for the fuel cell hybrid electric vehicle to enter a normal air-conditioning mode; and if the air conditioner has the warm air request, the battery temperature is less than or equal to the battery temperature upper limit value Th3 in the warm-up mode, or the temperature of the cooling liquid of the galvanic pile is less than or equal to the galvanic pile temperature upper limit value Th4 in the warm-up mode, controlling the thermal management system for the fuel cell hybrid electric vehicle to enter an air-conditioning warm-up mode.

In response to the thermal management system for the fuel cell hybrid electric vehicle is controlled to enter the warm-up mode:
the vehicle control unit, VCU, controls the hydrogen combustion heater 201 to enter a working state, the vehicle control unit, VCU, calculates a corresponding hydrogen inflow of the hydrogen combustion heater 201 according to a battery temperature reported by the battery management system, BMS, the temperature of a galvanic pile loop reported by the fuel cell control unit, FCCU, and the pressure of the hydrogen cylinder, converts the hydrogen inflow into a duty ratio signal of the first electromagnetic valve 401, and sends the duty ratio signal to the fuel cell control unit, FCCU; the fuel cell control unit, FCCU, controls the duty ratio of the first electromagnetic valve 401 to control the gas inflow of the hydrogen combustion heater 201; the vehicle control unit, VCU, controls the thermostat 103, so that the BC direction thereof is turned on and the A direction thereof is turned off (a default turn-on condition of the thermostat 103 is that the BC direction is turned on and the A direction is turned off, and only when the galvanic pile 105 needs to be cooled, the A direction of the thermostat 103 is turned on, so that the cooling liquid cools the galvanic pile 105 by means of the radiator 101); the vehicle control unit, VCU, controls the BC direction of the heating three-way valve 203 to be turned on and the A end thereof to be turned off; the heating water pump 204 is in the working state (the working rotation speed thereof is obtained by table lookup according to the temperature of the heating loop front-end temperature sensor 206), the galvanic pile water pump 104 is in the working state (the working rotation speed thereof is designed according to the temperature of the fuel cell control unit, FCCU, so that the galvanic pile 105 is quickly warmed up), and the battery water pump 302 in the working state; the BC direction of the thermostat 103 is turned on, and the A direction thereof is turned off; the AC direction of the battery three-way valve 304 is turned on, and the B direction thereof is turned off; and the air-conditioning controller, AC, controls the air conditioner to enter a non-working state.

In response to the thermal management system for the fuel cell hybrid electric vehicle being controlled to enter the air-conditioning warm-up mode:
the vehicle control unit, VCU, controls the hydrogen combustion heater 201 to enter the working state, the vehicle control unit, VCU, calculates a corresponding hydrogen inflow of the hydrogen combustion heater 201 according to a battery temperature reported by the battery management system, BMS, the temperature of the galvanic pile loop reported by the fuel cell control unit, FCCU, a target temperature *Tac* of the air conditioner and the pressure of the hydrogen cylinder, converts the hydrogen inflow into a duty ratio signal of the first electromagnetic valve 401, and sends the duty ratio signal to the fuel cell control unit, FCCU; the fuel cell control unit, FCCU, controls the duty ratio of the first electromagnetic valve 401 to control the gas inflow of the hydrogen combustion heater 201; the vehicle control unit, VCU, controls the thermostat 103, so that the BC direction thereof is turned on, and the A direction thereof is turned off; the BC direction of the heating three-way valve 203 is turned on, and the A direction thereof is turned off; the heating water pump 204, the galvanic pile water pump 104 and the battery water pump 302 are all in the working state; the AC direction of the battery three-way valve 304 is turned on, and the B direction thereof is turned off; the air-conditioning controller, AC, controls the air conditioner to enter a warm air mode; and the warm air core body 202 blows out the heat generated by the hydrogen combustion heater 201 for warming a driver.

In response to the thermal management system for the fuel cell hybrid electric vehicle being controlled to enter the normal air-conditioning mode:
in this mode, both the fuel cell galvanic pile and the battery 305 are warmed up, the vehicle control unit, VCU, judges the working state of the heating three-way valve 203, the working state of the hydrogen combustion heater 201 and the working states of a plurality of water pumps according to whether the galvanic pile 105 works, a temperature T106 reported by the galvanic pile temperature sensor 106, the target temperature Tac of the air conditioner, and a temperature T207 reported by the heating loop rear-end temperature sensor 207:
1) when the fuel cell galvanic pile does not work, if T106≥Tac, the vehicle control unit, VCU, controls the galvanic pile water pump 104 to enter the working state, the BC direction of the heating three-way valve 203 is turned on and the direction A thereof is turned off, the heating water pump 204 works, and the hydrogen combustion heater 201 is in a shutdown mode; and in this mode, the waste heat generated by the fuel cell galvanic pile is used for providing warm air for the air conditioner.
2) when the fuel cell galvanic pile does not work, if T106<Tac, the vehicle control unit, VCU, controls the galvanic pile water pump 104 to enter a disconnected state, the C direction of the heating three-way valve 203 is turned off and the AB direction thereof is turned on, the heating water pump 204 works, and the hydrogen combustion heater 201 is in a working mode; and in this mode, warm air is provided for the air conditioner by means of the hydrogen combustion heater 201.
3) when the fuel cell galvanic pile works, if T106≥Tac, the vehicle control unit, VCU, controls the galvanic pile water pump 104 to enter the working state, the BC direction of the heating three-way valve 203 is turned on and the direction A thereof is turned off, the heating water pump 204 works, and the hydrogen combustion heater 201 is in the shutdown mode; and in this mode, the waste heat generated by the fuel cell galvanic pile is used for providing warm air for the air conditioner.
4) when the fuel cell galvanic pile works, if T106<Tac, the vehicle control unit, VCU, controls the galvanic pile water pump 104 to enter the disconnected state, the AB direction of the heating three-way valve 203 is turned on and the C direction thereof is turned off, the heating water pump 204 works, and the hydrogen combustion heater 201 is in the working mode; and in this mode, warm air is provided for the air conditioner by means of the hydrogen combustion heater 201.
5) when the fuel cell galvanic pile works, if T106<Tac and T106< T207, the vehicle control unit, VCU, controls the galvanic pile water pump 104 to enter the working state, the BC direction of the heating three-way valve is turned on and the A direction thereof is turned off, the heating water pump 204 works, and the hydrogen combustion heater 201 is in the working mode; and in this mode, warm air is provided for the air conditioner by means of the hydrogen combustion heater 201.

In the normal air-conditioning mode, the battery management system, BMS, controls the AC direction of the battery three-way valve 304 to be turned on and the B end thereof to be turned off, when the battery temperature is lower than a certain value Tbat1, the battery management system, BMS, controls the rotation speed of the battery water pump 302 to linearly change within a certain value, and when the battery temperature is greater than a certain value Tbat2, the battery 305 is cooled by the refrigeration of the air conditioner, at this time, the battery management system, BMS, controls the BC direction of the battery three-way valve 304 to be turned on and the A end thereof to be turned off, and the battery water pump 302 is in a maximum rotation speed working state. That is, the turn-on condition of the battery three-way valve 304 changes according to the temperature of the battery 305.

In response to the thermal management system for the fuel cell hybrid electric vehicle being controlled to enter the normal cooling mode:
in this mode, the fuel cell galvanic pile and the battery 305 are both warmed up, and the air conditioner has no warm air requirement, the vehicle control unit, VCU, controls the AB direction of the heating three-way valve 203 to be turned on and the C end thereof to be turned off; the heating water pump 204 does not work; according to whether the galvanic pile 105 works, and the temperature reported by the galvanic pile temperature sensor 106, the rotation speed of the galvanic pile water pump 104 and the rotation speed of the cooling fan 102 are controlled; when the galvanic pile 105 needs to be cooled, the AC direction of the thermostat 103 is turned on and the B direction thereof is turned off, so that the cooling liquid cools the galvanic pile 105 through the radiator 101; the battery management system, BMS, controls the AC direction of the battery three-way valve 304 to be turned on and the B end thereof to be turned off; and when the battery temperature is lower than a certain value Tbat1, the battery management system, BMS, controls the rotation speed of the battery water pump 302 to linearly change within a certain value, and when the battery temperature is greater than a certain value Tbat2, the battery 305 is cooled by the refrigeration of the air conditioner, at this time, the battery management system, BMS, controls the BC direction of the battery three-way valve 304 to be turned on and the A end thereof to be turned off, and the battery water pump 302 is in the maximum rotation speed working state.

In the present invention, the heating loop is additionally provided in the thermal management system for the fuel cell hybrid electric vehicle, the heating loop can transfer heat to the galvanic pile cooling and heating loop and the battery cooling and heating loop to warm up a fuel cell engine and a power battery, thereby avoiding the problem of low conversion efficiency of the fuel cell engine in a low-temperature environment, and avoiding the problem of low power discharge power of the power battery in the low-temperature environment. Meanwhile, the waste heat generated by the heating loop or the reaction of the fuel cell galvanic pile can be used for supplying heat to the warm air core body 202 of the air conditioner, thereby improving the economical efficiency of the heating mode of the air conditioner.

### Embodiment 3

Embodiment 3 of the present invention further provides a vehicle. Components of the vehicle may include, but are not limited to, a vehicle body, a thermal management system for a fuel cell hybrid electric vehicle, a memory, and a bus for connecting different system components (including a memory and at least one processor).

As a computer-readable storage medium, the memory may be configured to store software programs, computer-executable programs and modules, for example, program instructions corresponding to the thermal management method for the fuel cell hybrid electric vehicle in the embodiments of the present invention. The processor in the thermal management system for the fuel cell hybrid electric vehicle executes various functional applications and data processing of the vehicle, that is, implements the thermal management method for the fuel cell hybrid electric vehicle, through running the software programs, instructions and modules stored in the memory.

The memory may mainly include a program storage area and a data storage area, wherein the program storage area may store application programs required by an operating system and at least one function; and the data storage area may store data created based on the use of a terminal, etc. In addition, the memory may include a high-speed random access memory, and may also include a non-volatile memory, such as at least one magnetic disk storage device, a flash memory device, or other non-volatile solid-state storage devices. In some instances, the memory may include memories that are disposed remotely relative to the processor, and these remote memories may be connected to the vehicle by means of a network. Instances of the network include, but are not limited to, the Internet, an intranet, a local area network, a mobile communication network, and combinations thereof.

### Embodiment 4

Embodiment 4 of the present invention further provides a computer-readable storage medium, storing a computer program, wherein when executing by at least one processor, the program implements a thermal management method for a fuel cell hybrid electric vehicle, and the thermal management method for the fuel cell hybrid electric vehicle includes the following steps:
determining whether an air conditioner has a warm air request; if the air conditioner has no warm air request, and a battery temperature is less than a battery temperature threshold value Th1 in a warm-up mode or the temperature of cooling liquid of a galvanic pile is less than a galvanic pile temperature threshold value Th2 in the warm-up mode, controlling a thermal management system for a fuel cell hybrid electric vehicle to enter the warm-up mode; if the air conditioner has no warm air request, the battery temperature is greater than or equal to the battery temperature threshold value Th1 in the warm-up mode, and the temperature of the cooling liquid of the galvanic pile is greater than or equal to the galvanic pile temperature threshold value Th2 in the warm-up mode, controlling the thermal management system for the fuel cell hybrid electric vehicle to enter a normal cooling mode; if the air conditioner has the warm air request, the battery temperature is greater than a battery temperature upper limit value Th3 in the warm-up mode, and the temperature of the cooling liquid of the galvanic pile is greater than a galvanic pile temperature upper limit value Th4 in the warm-up mode, controlling the thermal management system for the fuel cell hybrid electric vehicle to enter a normal air-conditioning mode; and if the air conditioner has the warm air request, the battery temperature is less than or equal to the battery temperature upper limit value Th3 in the warm-up mode, or the temperature of the cooling liquid of the galvanic pile is less than or equal to the galvanic pile temperature upper limit value Th4 in the warm-up mode, controlling the thermal management system for the fuel cell hybrid electric vehicle to enter an air-conditioning warm-up mode.

Based on the computer-readable storage medium provided in the embodiment of the present invention, computer-executable instructions thereof are not limited to the method operations described above, and may also execute related operations in the thermal management method for the fuel cell hybrid electric vehicle provided in any embodiment of the present invention.

Those ordinary skilled in the art may be aware that, units and algorithm steps of examples described in combination with the embodiments disclosed in the present invention may be implemented by electronic hardware, or a combination of computer software and electronic hardware. Whether these functions are executed in a hardware or software mode depends on specific inventions and design constraint conditions of the technical solutions. Those skilled in the art may use different methods to implement the described functions for each specific invention, but it should not be considered that this implementation exceeds the scope of the present invention.

All or some of the above embodiments may be implemented by software, hardware, firmware, or any combination thereof. When implemented by using software, all or some of the above embodiments may be implemented in the form of a computer program product. The computer program product includes at least one computer instructions. When the computer program instructions are loaded and executed on a computer, the processes or functions based on the embodiments of the present invention are all or partially generated. The computer may be a general-purpose computer, a special-purpose computer, a computer network, or other programmable devices. The computer instructions may be stored in a computer-readable storage medium or transmitted through the computer-readable storage medium. The computer instructions may be transmitted from one website, computer, server or data center to another website, computer, server or data center in a wired (e.g., a coaxial cable, an optical fiber, a digital subscriber line (Digital Subscriber Line, DSL)), or wireless (e.g., infrared, wireless, microwave and the like) mode. The computer-readable storage medium may be any usable medium accessible by the computer, or a data storage device, such as a server or a data center, which is integrated with at least one usable media. The usable medium may be a magnetic medium (e.g., a floppy disk, a hard disk or a magnetic tape), an optical medium (e.g., a digital video disc (Digital Video Disc, DVD)), or a semiconductor medium (e.g., a solid state disk (Solid State Disk, SSD)), etc.

In the above embodiments, multiple units and modules included are divided based on function logic, but are not limited to the foregoing division, and are not used to limit the protection scope of the present invention.

## Claims

1. A thermal management system for a fuel cell hybrid electric vehicle, comprising:
a galvanic pile cooling and heating loop, a battery cooling and heating loop, a heating loop and a refrigerating loop;
the galvanic pile cooling and heating loop comprises a radiator (101), a thermostat (103), a galvanic pile water pump (104), a galvanic pile (105) and a galvanic pile temperature sensor (106), the thermostat (103) comprises a liquid inlet C, a liquid outlet A and a liquid outlet B, the liquid outlet A is connected with an inlet of the radiator (101), an outlet of the radiator (101) is connected with the inlet of the galvanic pile water pump (104), and a branch is lead out from the liquid outlet B to be connected between the radiator (101) and the galvanic pile water pump (104); the radiator (101) is configured with a cooling fan (102), which is configured to blow air to the radiator (101); an outlet of the galvanic pile water pump (104) is connected with a cooling liquid inlet of the galvanic pile (105), a cooling liquid outlet of the galvanic pile (105) is connected with the liquid inlet C of the thermostat (103), and the galvanic pile temperature sensor (106) is configured between the galvanic pile (105) and the thermostat (103);
the battery cooling and heating loop comprises a battery (305), a battery water pump (302), a battery temperature sensor (301) and a battery three-way valve (304), which are connected in sequence;
the heating loop comprises a hydrogen combustion heater (201), a warm air core body (202), a heating loop rear-end temperature sensor (207), a heating three-way valve (203), a heating water pump (204), a heat exchanger (205) and a heating loop front-end temperature sensor (206), which are connected in sequence;
the refrigerating loop comprises an air conditioner (306) and a cooler (303), and the air conditioner (306) are connected with the cooler (303), and the cooler (303) is configured to exchange heat with the battery cooling and heating loop;
wherein the battery three-way valve (304) comprises an interface A, an interface B and an interface C, the interface B of the battery three-way valve (304) and the interface C of the battery three-way valve (304) are connected in the battery cooling and heating loop, the interface A of the battery three-way valve (304) is connected with an outlet on the side of the heat exchanger (205) that is not connected with the heating loop, an inlet on the side of the heat exchanger (205) that is not connected with the heating loop is connected between the battery temperature sensor (301) and the interface B of the battery three-way valve (304);
the heating three-way valve (203) comprises an interface A, an interface B and an interface C, the interface A of the heating three-way valve (203) and the interface B of the heating three-way valve (203) are connected in the heating loop, the interface C of the heating three-way valve (203) is connected between the galvanic pile temperature sensor (106) and the thermostat (103), a branch is lead out between the heating loop rear-end temperature sensor (207) and the interface A of the heating three-way valve (203), the branch is connected with the liquid inlet C of the thermostat (103), and a connection point between the interface A of the heating three-way valve (203) and the galvanic pile cooling and heating loop is closer to the thermostat (103) than a connection point between the interface C of the heating three-way valve (203) and the galvanic pile cooling and heating loop.

2. The thermal management system for the fuel cell hybrid electric vehicle as claimed in claim 1, further comprising:
a vehicle control unit, VCU, configured to control the cooling fan (102), the thermostat (103), the galvanic pile water pump (104), the heating three-way valve (203), the heating water pump (204) and the hydrogen combustion heater (201);
a battery management system, BMS, configured to control the battery water pump (302) and the battery three-way valve (304);
an air-conditioning controller, AC, configured to control an air speed of the warm air core body (202) and control the cooler (303) to cool the battery (305) in response to overheating of the battery (305);
a fuel cell control unit, FCCU, configured to control a hydrogen supply of the galvanic pile (105) and the hydrogen supply of the hydrogen combustion heater (201).

3. The thermal management system for the fuel cell hybrid electric vehicle as claimed in claim 2, wherein both the galvanic pile (105) and the hydrogen combustion heater (201) are connected with a hydrogen cylinder, a first electromagnetic valve (401) is configured between the hydrogen combustion heater (201) and the hydrogen cylinder, and a second electromagnetic valve (402) is configured between the galvanic pile (105) and the hydrogen cylinder.

4. A thermal management method for a fuel cell hybrid electric vehicle, configured to the thermal management system for the fuel cell hybrid electric vehicle as claimed in any one of claims 1-3, comprising:
determining whether a warm air request is sent from the air conditioner;
in response to not receiving warm air request sent from the air conditioner, and the battery temperature being less than a battery temperature threshold value *Th1* in a warm-up mode, or the temperature of cooling liquid of the galvanic pile being less than a galvanic pile temperature threshold value *Th2* in the warm-up mode, controlling the thermal management system for the fuel cell hybrid electric vehicle to enter a warm-up mode;
in response to not receiving warm air request sent from the air conditioner, and the battery temperature being greater than or equal to the battery temperature threshold value *Th1* in the warm-up mode, and the temperature of the cooling liquid of the galvanic pile being greater than or equal to the galvanic pile temperature threshold value *Th2* in the warm-up mode, controlling the thermal management system for the fuel cell hybrid electric vehicle to enter a normal cooling mode;
in response to receiving the warm air request sent from the air conditioner, and the battery temperature being greater than a battery temperature upper limit value *Th3* in the warm-up mode, and the temperature of the cooling liquid of the galvanic pile being greater than a galvanic pile temperature upper limit value *Th4* in the warm-up mode, controlling the thermal management system for the fuel cell hybrid electric vehicle to enter a normal air-conditioning mode;
in response to the air conditioner having the warm air request, the battery temperature being less than or equal to the battery temperature upper limit value *Th3* in the warm-up mode, or the temperature of the cooling liquid of the galvanic pile being less than or equal to the galvanic pile temperature upper limit value *Th4* in the warm-up mode, controlling the thermal management system for the fuel cell hybrid electric vehicle to enter an air-conditioning warm-up mode.

5. The thermal management method for the fuel cell hybrid electric vehicle as claimed in claim 4, wherein in response to the thermal management system for the fuel cell hybrid electric vehicle being controlled to enter the warm-up mode:
the vehicle control unit, VCU, controls the hydrogen combustion heater (201) to enter a working state, calculates a hydrogen inflow of the hydrogen combustion heater (201) based on a battery temperature reported by the battery management system, BMS, the temperature of a galvanic pile loop reported by the fuel cell control unit, FCCU, and the pressure of the hydrogen cylinder, converts the hydrogen inflow into a duty ratio signal of the first electromagnetic valve (401), and sends the duty ratio signal to the FCCU; the FCCU controls the duty ratio of the first electromagnetic valve (401) to control the gas inflow of the hydrogen combustion heater (201); the VCU controls the thermostat (103) to turn on the BC direction of the thermostat (103) and turn off the A direction of the battery three-way valve (304), and controls the heating three-way valve (203) to turn on the BC direction of the battery three-way valve (304) and turn off the A direction of the battery three-way valve (304); the heating water pump (204), the galvanic pile water pump (104) and the battery water pump (302) are all in the working state; turn on the AC direction of the battery three-way valve (304), and turn off the B direction of the battery three-way valve (304); and the air-conditioning controller, AC, controls the air conditioner to enter a non-working state.

6. The thermal management method for the fuel cell hybrid electric vehicle as claimed in claim 4, wherein in response to the thermal management system for the fuel cell hybrid electric vehicle being controlled to enter the air-conditioning warm-up mode:
the VCU controls the hydrogen combustion heater (201) to enter the working state, calculates a hydrogen inflow of the hydrogen combustion heater (201) based on a battery temperature reported by the BMS, the temperature of the galvanic pile loop reported by the FCCU, a target temperature *Tac* of the air conditioner and the pressure of the hydrogen cylinder, converts the hydrogen inflow into a duty ratio signal of the first electromagnetic valve (401), and sends the duty ratio signal to the FCCU; the FCCU controls the duty ratio of the first electromagnetic valve (401) to control the gas inflow of the hydrogen combustion heater (201); the VCU controls the thermostat (103) to turn on the BC direction of the thermostat (103) and turn off the A direction of the battery three-way valve (304); turn on the BC direction of the heating three-way valve (203), and turn off the A direction of the battery three-way valve (304); the heating water pump (204), the galvanic pile water pump (104) and the battery water pump (302) are all in the working state; turn on the AC direction of the battery three-way valve (304), and turn off the B direction of the battery three-way valve (304); the air-conditioning controller, AC, controls the air conditioner to enter a warm air mode; and the warm air core body (202) blows out the heat generated by the hydrogen combustion heater (201) to warm a driver.

7. The thermal management method for the fuel cell hybrid electric vehicle as claimed in claim 4, wherein in response to the thermal management system for the fuel cell hybrid electric vehicle being controlled to enter the normal air-conditioning mode:
both the fuel cell galvanic pile and the battery (305) are warmed up, the VCU determines the working state of the heating three-way valve (203), the working state of the hydrogen combustion heater (201) and the working states of a plurality of water pumps based on whether the galvanic pile (105) works, a temperature *T106* reported by the galvanic pile temperature sensor (106), the target temperature *Tac* of the air conditioner, and a temperature *T207* reported by the heating loop rear-end temperature sensor (207):
in response to the fuel cell galvanic pile does not work, and T106≥Tac, the VCU controls the galvanic pile water pump (104) to enter the working state, turning on the BC direction of the heating three-way valve (203) and turning off the direction A of the heating three-way valve (203), the heating water pump (204) works, and the hydrogen combustion heater (201) is in a shutdown mode;
in response to the fuel cell galvanic pile does not work, and T106<Tac, the VCU controls the galvanic pile water pump (104) to enter a disconnected state, turning off the C direction of the heating three-way valve (203) and turning on the AB direction of the heating three-way valve (203), the heating water pump (204) works, and the hydrogen combustion heater (201) is in a working mode;
in response to the fuel cell galvanic pile working, and T106≥Tac, the VCU controls the galvanic pile water pump (104) to enter the working state, turning on the BC direction of the heating three-way valve (203) and turning off the direction A of the heating three-way valve (203), the heating water pump (204) works, and the hydrogen combustion heater (201) is in the shutdown mode;
in response to the fuel cell galvanic pile working, and T106<Tac, the VCU controls the galvanic pile water pump (104) to enter the disconnected state, turning on the AB direction of the heating three-way valve (203) and turning off the C direction of the heating three-way valve (203), the heating water pump (204) works, and the hydrogen combustion heater (201) is in the working mode;
in response to the fuel cell galvanic pile working, T106<Tac and T106< T207, the VCU controls the galvanic pile water pump (104) to enter the working state, turning off the C direction of the heating three-way valve (203) and turning on the AB direction of the heating three-way valve (203), the heating water pump (204) works, and the hydrogen combustion heater (201) is in the working mode;
in the normal air-conditioning mode, the BMS controls the AC direction of the battery three-way valve (304) to be turned on and the B end of the heating three-way valve (203) to be turned off, in response to the battery temperature being lower than a certain value *Tbat1,* the BMS controls the rotation speed of the battery water pump (302) to linearly change within a certain value, and in response to the battery temperature being greater than a certain value *Tbat2,* the battery is cooled by the refrigeration of the air conditioner, the BMS controls the BC direction of the battery three-way valve (304) to be turned on and the A end of the heating three-way valve (203) to be turned off, and the battery water pump (302) is in a maximum rotation speed working state.

8. The thermal management method for the fuel cell hybrid electric vehicle as claimed in claim 4, wherein in response to the thermal management system for the fuel cell hybrid electric vehicle being controlled to enter the normal cooling mode:
the fuel cell galvanic pile and the battery (305) are both warmed up, and the air conditioner has no warm air requirement, the VCU controls the AB direction of the heating three-way valve (203) to be turned on and the C end of the heating three-way valve (203) to be turned off; the heating water pump (204) does not work; controlling the rotation speed of the galvanic pile water pump (104) and the rotation speed of the cooling fan (102) based on whether the galvanic pile (105) works and the temperature reported by the galvanic pile temperature sensor (106); the BMS controls the AC direction of the battery three-way valve (304) to be turned on and the B end of the heating three-way valve (203) to be turned off; and in response to the battery temperature being lower than a certain value *Tbat1,* the BMS controls the rotation speed of the battery water pump (302) to linearly change within a certain value, and in response to the battery temperature being greater than a certain value *Tbat2,* cooling the battery by the refrigeration of the air conditioner, the battery management system (BMS) controls the BC direction of the battery three-way valve (304) to be turned on and the A end of the heating three-way valve (203) to be turned off, and the battery water pump (302) is in the maximum rotation speed working state.

9. A vehicle, comprising:
a thermal management system for a fuel cell hybrid electric vehicle as claimed in any one of claims 1-3;
a memory, configured to store at least one program, wherein when the at least one program is executed by at least one processor in the thermal management system for the fuel cell hybrid electric vehicle, the at least one processor implements the thermal management method for the fuel cell hybrid electric vehicle as claimed in any one of claims 4-8.

10. A computer-readable storage medium, storing a computer program, wherein the program implements the thermal management method for the fuel cell hybrid electric vehicle as claimed in any one of claims 4-8 when executing by the at least one processor.

## Patentansprüche

1. Wärmeverwaltungssystem für ein Brennstoffzellen-Hybridelektrofahrzeug, umfassend:
einen Galvanikzellenkühl- und -heizkreislauf, einen Batteriekühl- und -heizkreislauf, einen Heizkreislauf und einen Kühlkreislauf;
der Galvanikzellenkühl- und -heizkreislauf einen Heizkörper (101), einen Thermostat (103), eine Galvanikzellenwasserpumpe (104), eine Galvanikzelle (105) und einen Galvanikzellentemperatursensor (106) umfasst, der Thermostat (103) einen Flüssigkeitseinlass C, einen Flüssigkeitsauslass A und einen Flüssigkeitsauslass B umfasst, der Flüssigkeitsauslass A mit einem Einlass des Heizkörpers (101) verbunden ist, ein Auslass des Heizkörpers (101) mit dem Einlass der Galvanikzellenwasserpumpe (104) verbunden ist, und eine Abzweigung vom Flüssigkeitsauslass B herausgeführt wird, um zwischen dem Heizkörper (101) und der Galvanikzellenwasserpumpe (104)verbunden zu werden; der Heizkörper (101) ist mit einem Kühlgebläse (102) ausgelegt, das ausgelegt ist, um Luft zum Heizkörper (101) zu blasen; ein Auslass der Galvanikzellenwasserpumpe (104) ist mit einem Kühlflüssigkeitseinlass der Galvanikzelle (105) verbunden, ein Kühlflüssigkeitsauslass der Galvanikzelle (105) ist mit dem Flüssigkeitseinlass C des Thermostats (103) verbunden und der Galvanikzellentemperatursensor (106) ist zwischen der Galvanikzelle (105) und dem Thermostat (103) ausgelegt;
der Batteriekühl- und -heizkreislauf umfasst eine Batterie (305), eine Batteriewasserpumpe (302), einen Batterietemperatursensor (301) und ein Batterie-Dreiwegeventil (304), die nacheinander verbunden sind; der Heizkreislauf umfasst einen Wasserstoffverbrennungserhitzer (201), einen Warmluftkernkörper (202), einen Heizkreislauf-Hecktemperatursensor (207), ein Heizungs-Dreiwegeventil (203), eine Heizwasserpumpe (204), einen Wärmetauscher (205) und einen Heizkreislauf-Fronttemperatursensor (206), die nacheinander verbunden sind;
der Kühlkreislauf umfasst eine Klimaanlage (306) und einen Kühler (303) und die Klimaanlage (306) ist mit dem Kühler (303) verbunden und der Kühler (303) ist dazu ausgelegt, Wärme mit dem Batteriekühl- und - heizkreislauf auszutauschen;
wobei das Batterie-Dreiwegeventil (304) eine Schnittstelle A, eine Schnittstelle *B* und eine Schnittstelle C umfasst, die Schnittstelle B des Batterie-Dreiwegeventils (304) und die Schnittstelle C des Batterie-Dreiwegeventils (304) in den Batteriekühl- und heizkreislauf verbunden sind, die Schnittstelle A des Batterie-Dreiwegeventils (304) mit einem Auslass auf der Seite des Wärmetauschers (205) verbunden ist, die nicht mit dem Heizkreislauf verbunden ist, ein Einlass auf der Seite des Wärmetauschers (205), die nicht mit dem Heizkreislauf verbunden ist, zwischen dem Batterietemperatursensor (301) und der Schnittstelle B des Batterie-Dreiwegeventils (304) verbunden ist;
das Heizungs-Dreiwegeventil (203) eine Schnittstelle A, eine Schnittstelle B und eine Schnittstelle C umfasst, die Schnittstelle A des Heizungs-Dreiwegeventils (203) und die Schnittstelle B des Heizungs-Dreiwegeventils (203) in dem Heizkreislauf verbunden sind, die Schnittstelle C des Heizungs-Dreiwegeventils (203) zwischen dem Galvanikzellentemperatursensor (106) und dem Thermostaten (103) verbunden ist, eine Abzweigung zwischen dem Heizkreislauf-Hecktemperatursensor (207) und der Schnittstelle A des Heizungs-Dreiwegeventils (203) herausgeführt wird, die Abzweigung mit dem Flüssigkeitseinlass C des Thermostaten (103) verbunden ist und ein Verbindungspunkt zwischen der Schnittstelle *A* des Heizungs-Dreiwegeventils (203) und dem Galvanikzellenkühl- und heizkreislauf näher am Thermostaten (103) liegt als ein Verbindungspunkt zwischen der Schnittstelle C des Heizungs-Dreiwegeventils (203) und dem Galvanikzellenkühl- und heizkreislauf.

2. Wärmeverwaltungssystem für das Brennstoffzellen-Hybridelektrofahrzeug nach Anspruch 1, ferner umfassend:
eine Fahrzeugsteuereinheit, VCU, die dazu ausgelegt ist, das Kühlgebläse (102), den Thermostat (103), die Galvanikzellenwasserpumpe (104), das Heizungs-Dreiwegeventil (203), die Heizungswasserpumpe (204) und den Wasserstoffverbrennungserhitzer (201) zu steuern;
ein Batterieverwaltungssystem, BMS, das dazu ausgelegt ist, die Batteriewasserpumpe (302) und das Batterie-Dreiwegeventil (304) zu steuern;
eine Klimatisierungssteuerung, AC, die dazu ausgelegt ist, eine Luftgeschwindigkeit des Warmluftkernkörpers (202) zu steuern und den Kühler (303) zu steuern, um die Batterie (305) als Reaktion auf eine Überhitzung der Batterie (305) zu kühlen;
eine Brennstoffzellensteuereinheit, FCCU, die dazu ausgelegt ist, eine Wasserstoffversorgung der Galvanikzelle (105) und die Wasserstoffversorgung des Wasserstoffverbrennungserhitzer (201) zu steuern.

3. Wärmeverwaltungssystem für das Brennstoffzellen-Hybridelektrofahrzeug nach Anspruch 2, wobei sowohl die Galvanikzelle (105) als auch der Wasserstoffverbrennungserhitzer (201) mit einem Wasserstoffzylinder verbunden sind, ein erstes elektromagnetisches Ventil (401) zwischen dem Wasserstoffverbrennungserhitzer (201) und dem Wasserstoffzylinder ausgelegt ist und ein zweites elektromagnetisches Ventil (402) zwischen der Galvanikzelle (105) und dem Wasserstoffzylinder ausgelegt ist.

4. Wärmeverwaltungsverfahren für ein Brennstoffzellen-Hybridelektrofahrzeug, das für das Wärmeverwaltungssystem für das Brennstoffzellen-Hybridelektrofahrzeug nach einem der Ansprüche 1-3 ausgelegt ist, umfassend:
Bestimmen, ob eine Warmluftanforderung von der Klimaanlage gesendet wird;
als Reaktion darauf, dass keine von der Klimaanlage gesendete Warmluftanforderung empfangen wird und darauf, dass die Batterietemperatur niedriger ist als ein Batterietemperaturschwellenwert *Th1* in einem Aufwärmmodus liegt oder die Temperatur der Kühlflüssigkeit der Galvanikzelle niedriger ist als ein Galvanikzellentemperaturschwellenwert *Th2* im Aufwärmmodus liegt, Steuern des Wärmeverwaltungssystems für das Brennstoffzellen-Hybridelektrofahrzeug, um in einen Aufwärmmodus einzutreten;
als Reaktion darauf, dass keine von der Klimaanlage gesendete Warmluftanforderung empfangen wird und darauf, dass die Batterietemperatur größer oder gleich dem Batterietemperaturschwellenwert *Th1* im Aufwärmmodus ist und dass die Temperatur der Kühlflüssigkeit der Galvanikzelle größer oder gleich dem Galvanikzellentemperaturschwellenwert *Th2* im Aufwärmmodus ist, Steuern des Wärmeverwaltungssystems für das Brennstoffzellen-Hybridelektrofahrzeug, um in einen normalen Kühlmodus einzutreten;
als Reaktion darauf, dass eine von der Klimaanlage gesendete Warmluftanforderung empfangen wird und darauf, dass die Batterietemperatur größer ist als ein oberer Batterietemperaturgrenzwert *Th3* im Aufwärmmodus und dass die Temperatur der Kühlflüssigkeit der Galvanikzelle größer ist als ein oberer Galvanikzellentemperaturgrenzwert *Th4* im Aufwärmmodus, Steuern des Wärmeverwaltungssystems für das Brennstoffzellen-Hybridelektrofahrzeug, um in einen normalen Klimatisierungsmodus einzutreten;
als Reaktion darauf, dass die Klimaanlage die Warmluftanforderung aufweist, die Batterietemperatur niedriger oder gleich dem oberen Batterietemperaturgrenzwert *Th3* im Aufwärmmodus ist oder die Temperatur der Kühlflüssigkeit der Galvanikzelle niedriger oder gleich dem oberen Galvanikzellegrenzwert *Th4* im Aufwärmmodus ist, Steuern des Wärmeverwaltungssystems für das Brennstoffzellen-Hybridelektrofahrzeug, um in einen Klimatisierungsaufwärmmodus einzutreten.

5. Wärmeverwaltungsverfahren für das Brennstoffzellen-Hybridelektrofahrzeug nach Anspruch 4, wobei als Reaktion darauf, dass das Wärmeverwaltungssystem für das Brennstoffzellen-Hybridelektrofahrzeug gesteuert wird, um in den Aufwärmmodus einzutreten:
die Fahrzeugsteuereinheit, VCU, steuert den Wasserstoffverbrennungserhitzer (201), um in einen Arbeitszustand einzutreten, berechnet einen Wasserstoffzufluss des Wasserstoffverbrennungserhitzers (201) auf Grundlage einer Batterietemperatur, die von dem Batterieverwaltungssystem, BMS, gemeldet wird, der Temperatur eines Galvanikzellenkreislaufs, die von der Brennstoffzellensteuereinheit, FCCU, gemeldet wird, und des Drucks des Wasserstoffzylinders, wandelt den Wasserstoffzufluss in ein Tastverhältnissesignal des ersten elektromagnetischen Ventils (401) um und sendet das Tastverhältnissesignal an die FCCU; die FCCU steuert das Tastverhältnis des ersten elektromagnetischen Ventils (401), um den Gaszufluss des Wasserstoffverbrennungserhitzers (201) zu steuern; die VCU steuert den Thermostat (103), um die Richtung *BC* des Thermostats (103) einzuschalten und um die Richtung A des Batterie-Dreiwegeventils (304) auszuschalten, und steuert das Heizungs-Dreiwegeventil (203), um die Richtung *BC* des Batterie-Dreiwegeventils (304) einzuschalten und die Richtung A des Batterie-Dreiwegeventils (304) auszuschalten; die Heizungswasserpumpe (204), die Galvanikzellenwasserpumpe (104) und die Batteriewasserpumpe (302) befinden sich alle im Arbeitszustand; Einschalten der Richtung *AC* des Batterie-Dreiwegeventils (304) und Ausschalten der Richtung B des Batterie-Dreiwegeventils (304); und die Klimatisierungssteuerung, AC, steuert die Klimaanlage, um in einen Nichtarbeitszustand einzutreten.

6. Wärmeverwaltungsverfahren für das Brennstoffzellen-Hybridelektrofahrzeug nach Anspruch 4, wobei als Reaktion darauf, dass das Wärmeverwaltungssystem für das Brennstoffzellen-Hybridelektrofahrzeug gesteuert wird, um in den Klimatisierugsaufwärmmodus einzutreten:
die VCU steuert den Wasserstoffverbrennungserhitzer (201), um in den Arbeitszustand einzutreten, berechnet einen Wasserstoffzufluss des Wasserstoffverbrennungserhitzers (201) auf der Grundlage einer Batterietemperatur, die von der BMS gemeldet wird, der Temperatur des Galvanikzellenkreislaufs, die von der FCCU gemeldet wird, einer Solltemperatur *Tac* der Klimaanlage und des Drucks des Wasserstoffzylinders, wandelt den Wasserstoffzufluss in ein Tastverhältnissesignal des ersten elektromagnetischen Ventils (401) um und sendet das Tastverhältnissesignal an die FCCU; die FCCU steuert das Tastverhältnis des ersten elektromagnetisches Ventil (401), um den Gaszufluss des Wasserstoffverbrennungserhitzers (201) zu steuern; die VCU steuert den Thermostat (103), um die Richtung *BC* des Thermostats (103) einzuschalten und die Richtung A des Batterie-Dreiwegeventils (304) auszuschalten; Einschalten der Richtung *BC* des Heizungs-Dreiwegeventils (203) und Ausschalten der Richtung A des Batterie-Dreiwegeventils (304); die Heizwasserpumpe (204), die Galvanikzellenwasserpumpe (104) und die Batteriewasserpumpe (302) befinden sich alle im Arbeitszustand; Einschalten der Richtung *AC* des Batterie-Dreiwegeventils (304) und Ausschalten der Richtung B des Batterie-Dreiwegeventils (304); die Klimatisierungssteuerung, AC, steuert die Klimaanlage, um in einen Warmluftmodus einzutreten; und der Warmluftkernkörper (202) bläst die von dem Wasserstoffverbrennungserhitzer (201) erzeugte Wärme aus, um eine/n Fahrer/in zu erwärmen.

7. Wärmeverwaltungsverfahren für das Brennstoffzellen-Hybridelektrofahrzeug nach Anspruch 4, wobei als Reaktion darauf, dass das Wärmeverwaltungssystem für das Brennstoffzellen-Hybridelektrofahrzeug gesteuert wird, um in den normalen Klimatisierungsmodus einzutreten:
sowohl die Galvanikzelle der Brennstoffzelle als auch die Batterie (305) aufgewärmt werden, bestimmt die VCU den Arbeitszustand des Heizungs-Dreiwegeventils (203), den Arbeitszustand des Wasserstoffverbrennungserhitzers (201) und die Arbeitszustände einer Vielzahl von Wasserpumpen auf der Grundlage davon, ob die Galvanikzelle (105) arbeitet, einer Temperatur *T106,* die von dem Galvanikzellentemperatursensor (106) gemeldet wird, der Solltemperatur *Tac* der Klimaanlage und einer Temperatur *T207,* die von dem Heizkreislauf-Hecktemperatursensor (207) gemeldet wird:
als Reaktion darauf, dass die Galvanikzelle der Brennstoffzelle nicht arbeitet und T106≥Tac, steuert die VCU die Galvanikzellenwasserpumpe (104), um in den Arbeitszustand einzutreten, indem die Richtung *BC* des Heizungs-Dreiwegeventils (203) eingeschaltet wird und die Richtung A des Heizungs-Dreiwegeventils (203) ausgeschaltet wird, die Heizungswasserpumpe (204) arbeitet und der Wasserstoffverbrennungserhitzer (201) befindet sich in einem Abschaltmodus;
als Reaktion darauf, dass die Galvanikzelle der Brennstoffzelle nicht arbeitet und T106<Tac, steuert die VCU die Galvanikzellenwasserpumpe (104), um in einen getrennten Zustand einzutreten, indem die Richtung C des Heizungs-Dreiwegeventils (203) ausgeschaltet wird und die Richtung AB des Heizungs-Dreiwegeventils (203) eingeschaltet wird, die Heizungswasserpumpe (204) arbeitet und der Wasserstoffverbrennungserhitzer (201) befindet sich in einem Arbeitsmodus;
als Reaktion darauf, dass die Galvanikzelle der Brennstoffzelle nicht arbeitet und T106≥Tac, steuert die VCU die Galvanikzellenwasserpumpe (104), um in den Arbeitszustand einzutreten, indem die Richtung *BC* des Heizungs-Dreiwegeventils (203) eingeschaltet wird und die Richtung A des Heizungs-Dreiwegeventils (203) ausgeschaltet wird, die Heizungswasserpumpe (204) arbeitet und der Wasserstoffverbrennungserhitzer (201) befindet sich in einem Abschaltmodus;
als Reaktion darauf, dass die Galvanikzelle der Brennstoffzelle arbeitet und T106<Tac, steuert die VCU die Galvanikzellenwasserpumpe (104), um in einen getrennten Zustand einzutreten, indem die Richtung AB des Heizungs-Dreiwegeventils (203) eingeschaltet wird und die Richtung C des Heizungs-Dreiwegeventils (203) ausgeschaltet wird, die Heizungswasserpumpe (204) arbeitet und der Wasserstoffverbrennungserhitzer (201) befindet sich in einem Arbeitsmodus;
als Reaktion darauf, dass die Galvanikzelle der Brennstoffzelle arbeitet, T106<Tac und T106< T207, steuert die VCU die Galvanikzellenwasserpumpe (104), um in den Arbeitszustand einzutreten, indem die Richtung C des Heizungs-Dreiwegeventils (203) ausgeschaltet wird und die Richtung AB des Heizungs-Dreiwegeventils (203) eingeschaltet wird, die Heizungswasserpumpe (204) arbeitet und der Wasserstoffverbrennungserhitzer (201) befindet sich im Arbeitsmodus;
im normalen Klimatisierungsmodus steuert die BMS die Richtung *AC* des einzuschaltenden Batterie-Dreiwegeventils (304) und das Ende *B* des auszuschaltenden Heizungs-Dreiwegeventils (203) als Reaktion darauf, dass die Batterietemperatur niedriger als ein bestimmter Wert *Tbat1* ist, steuert die BMS die Drehzahl der Batteriewasserpumpe (302), um sich innerhalb eines bestimmten Werts linear zu ändern, und
als Reaktion darauf, dass die Batterietemperatur größer als ein bestimmter Wert *That2* ist, wird die Batterie durch die Kühlung der Klimaanlage gekühlt, die BMS steuert die Richtung *BC* des einzuschaltenden Batterie-Dreiwegeventils (304) und das Ende A des auszuschaltenden Heizungs-Dreiwegeventils (203) und die Batteriewasserpumpe (302) befindet sich in einem Arbeitszustand mit maximaler Drehzahl.

8. Wärmeverwaltungsverfahren für das Brennstoffzellen-Hybridelektrofahrzeug nach Anspruch 4, wobei als Reaktion darauf, dass das Wärmeverwaltungssystem für das Brennstoffzellen-Hybridelektrofahrzeug gesteuert wird, um in den normalen Kühlmodus einzutreten:
die Galvanikzelle der Brennstoffzelle und die Batterie (305) beide aufgewärmt werden und die Klimaanlage keinen Warmluftbedarf aufweist, steuert die VCU die Richtung AB des einzuschaltenden Heizungs-Dreiwegeventils (203) und das Ende C des auszuschaltenden Heizungs-Dreiwegeventils (203); die Heizungswasserpumpe (204) arbeitet nicht;
Steuern der Drehzahl der Galvanikzellenwasserpumpe (104) und der Drehzahl des Kühlgebläses (102) auf der Grundlage davon, ob die Galvanikzelle (105) arbeitet und der Temperatur, die vom Galvanikzelle-Temperatursensor (106) gemeldet wird; die BMS steuert die Richtung AC des einzuschaltenden Batterie-Dreiwegeventils (304) und das Ende B des auszuschaltenden Heizungs-Dreiwegeventils (203); und als Reaktion darauf, dass die Batterietemperatur niedriger als ein bestimmter Wert *Tbat1* ist, steuert die BMS die Drehzahl der Batteriewasserpumpe (302), um sich innerhalb eines bestimmten Werts linear zu ändern, und als Reaktion darauf, dass die Batterietemperatur größer als ein bestimmter Wert *Tbat2* ist, Kühlen der Batterie durch die Kühlung der Klimaanlage, steuert das Batterieverwaltungssystem (BMS) die Richtung BC des einzuschaltenden Batterie-Dreiwegeventils (304) und das Ende A des auszuschaltenden Heizungs-Dreiwegeventils (203), und die Batteriewasserpumpe (302) befindet sich im Arbeitszustand mit maximaler Drehzahl.

9. Fahrzeug, umfassend:
ein Wärmeverwaltungssystem für ein Brennstoffzellen-Hybridelektrofahrzeug nach einem der Ansprüche 1-3;
einen Speicher, der dazu ausgelegt ist, mindestens ein Programm zu speichern, wobei, wenn das mindestens eine Programm durch mindestens einen Prozessor in dem Wärmeverwaltungssystem für das Brennstoffzellen-Hybridelektrofahrzeug ausgeführt wird, der mindestens eine Prozessor das Wärmeverwaltungsverfahren für das Brennstoffzellen-Hybridelektrofahrzeug nach einem der Ansprüche 4-8 implementiert.

10. Computerlesbares Speichermedium, das ein Computerprogramm speichert, wobei das Programm das Wärmeverwaltungsverfahren für das Brennstoffzellen-Hybridelektrofahrzeug nach einem der Ansprüche 4-8 implementiert, wenn es durch den mindestens einen Prozessor ausgeführt wird.

## Revendications

1. Système de gestion thermique pour véhicule électrique hybride à pile à combustible, comprenant :
une boucle de refroidissement et de chauffage de pile galvanique, une boucle de refroidissement et de chauffage de batterie, une boucle de chauffage et une boucle de réfrigération ;
la boucle de refroidissement et de chauffage de la pile galvanique comprend un radiateur (101), un thermostat (103), une pompe à eau de la pile galvanique (104), une pile galvanique (105) et un capteur de température de la pile galvanique (106), le thermostat (103) comprend une entrée de liquide C, une sortie de liquide A et une sortie de liquide B, la sortie de liquide A est reliée à une entrée du radiateur (101), une sortie du radiateur (101) est reliée à l'entrée de la pompe à eau de la pile galvanique (104), et une branche part de la sortie de liquide B pour être reliée entre le radiateur (101) et la pompe à eau de la pile galvanique (104) ; le radiateur (101) est configuré avec un ventilateur de refroidissement (102), qui est configuré pour souffler de l'air vers le radiateur (101) ; une sortie de la pompe à eau de la pile galvanique (104) est reliée à une entrée de liquide de refroidissement de la pile galvanique (105), une sortie de liquide de refroidissement de la pile galvanique (105) est reliée à l'entrée de liquide C du thermostat (103), et le capteur de température de la pile galvanique (106) est configuré entre la pile galvanique (105) et le thermostat (103) ;
la boucle de refroidissement et de chauffage de la batterie comprend une batterie (305), une pompe à eau de la batterie (302), un capteur de température de la batterie (301) et une vanne à trois voies de la batterie (304), qui sont reliés en séquence ;
la boucle de chauffage comprend un réchauffeur à combustion d'hydrogène (201), un corps de noyau d'air chaud (202), un capteur de température arrière de la boucle de chauffage (207), une vanne à trois voies de chauffage (203), une pompe à eau de chauffage (204), un échangeur de chaleur (205) et un capteur de température avant de la boucle de chauffage (206), qui sont reliés en séquence ;
la boucle de réfrigération comprend un climatiseur (306) et un refroidisseur (303), et le climatiseur (306) est relié au refroidisseur (303), et le refroidisseur (303) est configuré pour échanger de la chaleur avec la boucle de refroidissement et de chauffage de la batterie ;
dans lequel la vanne à trois voies de la batterie (304) comprend une interface A, une interface B et une interface C, l'interface B de la vanne à trois voies de la batterie (304) et l'interface C de la vanne à trois voies de la batterie (304) sont reliées dans la boucle de refroidissement et de chauffage de la batterie, l'interface A de la vanne à trois voies de la batterie (304) est reliée à une sortie du côté de l'échangeur de chaleur (205) qui n'est pas relié à la boucle de chauffage, une entrée du côté de l'échangeur de chaleur (205) qui n'est pas relié à la boucle de chauffage est reliée entre le capteur de température de la batterie (301) et l'interface B de la vanne à trois voies de la batterie (304) ;
la vanne à trois voies de chauffage (203) comprend une interface A, une interface B et une interface C, l'interface A de la vanne à trois voies de chauffage (203) et l'interface B de la vanne à trois voies de chauffage (203) sont reliées dans la boucle de chauffage, l'interface C de la vanne à trois voies de chauffage (203) est reliée entre le capteur de température de la pile galvanique (106) et le thermostat (103), une branche part entre le capteur de température arrière de la boucle de chauffage (207) et l'interface A de la vanne à trois voies de chauffage (203), la branche est reliée à l'entrée de liquide C du thermostat (103), et un point de raccordement entre l'interface A de la vanne à trois voies de chauffage (203) et la boucle de refroidissement et de chauffage de la pile galvanique est plus proche du thermostat (103) qu'un point de raccordement entre l'interface C de la vanne à trois voies de chauffage (203) et la boucle de refroidissement et de chauffage de la pile galvanique.

2. Système de gestion thermique pour le véhicule électrique hybride à pile à combustible selon la revendication 1, comprenant en outre :
une unité de commande de véhicule, VCU, configurée pour commander le ventilateur de refroidissement (102), le thermostat (103), la pompe à eau de la pile galvanique (104), la vanne à trois voies de chauffage (203), la pompe à eau de chauffage (204) et le réchauffeur à combustion d'hydrogène (201) ;
un système de gestion de batterie, BMS, configuré pour commander la pompe à eau de la batterie (302) et la vanne à trois voies de la batterie (304) ;
un contrôleur de climatisation, AC, configuré pour contrôler la vitesse de l'air du corps du noyau d'air chaud (202) et pour contrôler le refroidisseur (303) afin de refroidir la batterie (305) en réponse à une surchauffe de la batterie (305) ;
une unité de commande de pile à combustible, FCCU, configurée pour commander l'alimentation en hydrogène de la pile galvanique (105) et l'alimentation en hydrogène du réchauffeur à combustion d'hydrogène (201).

3. Système de gestion thermique pour le véhicule électrique hybride à pile à combustible selon la revendication 2, dans lequel la pile galvanique (105) et le réchauffeur à combustion d'hydrogène (201) sont reliés à une bouteille d'hydrogène, une première vanne électromagnétique (401) est configurée entre le réchauffeur à combustion d'hydrogène (201) et la bouteille d'hydrogène, et une seconde vanne électromagnétique (402) est configurée entre la pile galvanique (105) et la bouteille d'hydrogène.

4. Procédé de gestion thermique pour véhicule électrique hybride à pile à combustible, configuré pour le système de gestion thermique pour le véhicule électrique hybride à pile à combustible selon l'une quelconque des revendications 1-3, comprenant :
déterminer si une demande d'air chaud est envoyée par le climatiseur ;
en réponse à la non-réception d'une demande d'air chaud envoyée par le climatiseur, et la température de la batterie étant inférieure à une valeur seuil de température de la batterie *Th1* dans un mode de réchauffage, ou la température du liquide de refroidissement de la pile galvanique étant inférieure à une valeur seuil de température de la pile galvanique *Th2* dans le mode de réchauffage, commander le système de gestion thermique pour le véhicule électrique hybride à pile à combustible pour qu'il entre dans un mode de réchauffage ;
en réponse à la non-réception de la demande d'air chaud envoyée par le climatiseur, et la température de la batterie étant supérieure ou égale à la valeur seuil de température de la batterie *Th1* dans le mode de réchauffage, et la température du liquide de refroidissement de la pile galvanique étant supérieure ou égale à la valeur seuil de température de la pile galvanique Th2 dans le mode de réchauffage, commander le système de gestion thermique pour le véhicule électrique hybride à pile à combustible pour qu'il entre dans un mode de refroidissement normal ;
en réponse à la réception de la demande d'air chaud envoyée par le climatiseur, et la température de la batterie étant supérieure à la valeur limite supérieure de température de la batterie *Th3* dans le mode de réchauffage, et la température du liquide de refroidissement de la pile galvanique étant supérieure à une valeur limite supérieure de température de la pile galvanique Th4 dans le mode de réchauffage, commander le système de gestion thermique pour le véhicule électrique hybride à pile à combustible pour qu'il entre dans un mode de climatisation normal ;
en réponse à la demande d'air chaud du climatiseur, la température de la batterie étant inférieure ou égale à la valeur limite supérieure de température de la batterie *Th3* dans le mode de réchauffage, ou la température du liquide de refroidissement de la pile galvanique étant inférieure ou égale à la valeur limite supérieure de température de la pile galvanique Th4 dans le mode de réchauffage, commander le système de gestion thermique pour le véhicule électrique hybride à pile à combustible pour qu'il entre dans un mode de réchauffage de la climatisation.

5. Procédé de gestion thermique pour le véhicule électrique hybride à pile à combustible selon la revendication 4, dans lequel, en réponse au système de gestion thermique pour le véhicule électrique hybride à pile à combustible étant commandé pour entrer dans le mode de réchauffage :
l'unité de commande du véhicule, VCU, commande le réchauffeur à combustion d'hydrogène (201) pour qu'il entre dans un état de fonctionnement, calcule une arrivée d'hydrogène du réchauffeur à combustion d'hydrogène (201) sur la base d'une température de la batterie signalée par le système de gestion de batterie, BMS, de la température d'une boucle de pile galvanique signalée par l'unité de commande de la pile à combustible, FCCU, et de la pression de la bouteille d'hydrogène, convertit l'arrivée d'hydrogène en un signal de rapport cyclique de la première vanne électromagnétique (401), et envoie le signal de rapport cyclique à la FCCU ; la FCCU contrôle le rapport cyclique de la première vanne électromagnétique (401) pour commander l'arrivée de gaz du réchauffeur à combustion d'hydrogène (201) ; la VCU commande le thermostat (103) pour ouvrir la direction *BC* du thermostat (103) et fermer la direction A de la vanne à trois voies de la batterie (304), et commande la vanne à trois voies de chauffage (203) pour ouvrir la direction *BC* de la vanne à trois voies de la batterie (304) et fermer la direction A de la vanne à trois voies de la batterie (304) ; la pompe à eau de chauffage (204), la pompe à eau de la pile galvanique (104) et la pompe à eau de la batterie (302) sont toutes dans l'état de fonctionnement ; ouvrir la direction AC de la vanne à trois voies de la batterie (304), et fermer la direction B de la vanne à trois voies de la batterie (304) ; et le contrôleur de climatisation, AC, commande le climatiseur pour qu'il entre dans un état de non-fonctionnement.

6. Procédé de gestion thermique pour le véhicule électrique hybride à pile à combustible selon la revendication 4, dans lequel, en réponse au système de gestion thermique pour le véhicule électrique hybride à pile à combustible étant commandé pour entrer dans le mode de réchauffage par climatisation :
la VCU commande le réchauffeur à combustion d'hydrogène (201) pour qu'il entre en état de fonctionnement, calcule une arrivée d'hydrogène du réchauffeur à combustion d'hydrogène (201) sur la base de la température de la batterie signalée par le BMS, de la température de la boucle de pile galvanique signalée par la FCCU, d'une température cible *Tac* du climatiseur et de la pression de la bouteille d'hydrogène, convertit l'arrivée d'hydrogène en un signal de rapport cyclique de la première vanne électromagnétique (401) et envoie le signal de rapport cyclique à la FCCU ; la FCCU contrôle le rapport cyclique de la première vanne électromagnétique (401) pour commander l'arrivée de gaz du réchauffeur à combustion d'hydrogène (201) ; la VCU commande le thermostat (103) pour ouvrir la direction *BC* du thermostat (103) et fermer la direction A de la vanne à trois voies de la batterie (304) ; ouvre la direction *BC* de la vanne à trois voies du chauffage (203) et ferme la direction A de la vanne à trois voies de la batterie (304) ; la pompe à eau du chauffage (204), la pompe à eau de la pile galvanique (104) et la pompe à eau de la batterie (302) se trouvent toutes dans l'état de fonctionnement ; ouvre la direction AC de la vanne à trois voies de la batterie (304) et ferme la direction B de la vanne à trois voies de la batterie (304) ; le contrôleur de climatisation, AC, commande le climatiseur pour qu'il entre dans un mode air chaud ; et le corps du noyau d'air chaud (202) souffle la chaleur générée par le réchauffeur à combustion d'hydrogène (201) pour réchauffer un conducteur.

7. Procédé de gestion thermique pour le véhicule électrique hybride à pile à combustible selon la revendication 4, dans lequel, en réponse au système de gestion thermique pour le véhicule électrique hybride à pile à combustible étant commandé pour entrer dans le mode normal de climatisation :
la pile galvanique à pile à combustible et la batterie (305) sont réchauffées, la VCU détermine l'état de fonctionnement de la vanne à trois voies de chauffage (203), l'état de fonctionnement du réchauffeur à combustion d'hydrogène (201) et les états de fonctionnement d'une pluralité de pompes à eau sur la base du fonctionnement de la pile galvanique (105), d'une température *T106* signalée par le capteur de température de la pile galvanique (106), de la température cible *Tac* du climatiseur et d'une température *T207* signalée par le capteur de température arrière de la boucle de chauffage (207) :
en réponse au fait que la pile galvanique à pile à combustible ne fonctionne pas, et T106 ≥ Tac, la VCU commande la pompe à eau de la pile galvanique (104) pour qu'elle entre dans l'état de fonctionnement, en ouvrant la direction *BC* de la vanne à trois voies de chauffage (203) et en fermant la direction A de la vanne à trois voies de chauffage (203), la pompe à eau de chauffage (204) fonctionne, et le réchauffeur à combustion d'hydrogène (201) est dans un mode d'arrêt ;
en réponse au fait que la pile galvanique à pile à combustible ne fonctionne pas, et T106 < Tac, la VCU commande la pompe à eau de la pile galvanique (104) pour qu'elle entre dans un état débranché, en fermant la direction C de la vanne à trois voies de chauffage (203) et en ouvrant la direction AB de la vanne à trois voies de chauffage (203), la pompe à eau de chauffage (204) fonctionne, et le réchauffeur à combustion d'hydrogène (201) est dans un mode de fonctionnement ;
en réponse au fait que la pile galvanique à pile à combustible fonctionne, et T106 ≥ Tac, la VCU commande la pompe à eau de la pile galvanique (104) pour qu'elle entre dans l'état de fonctionnement, en ouvrant la direction *BC* de la vanne à trois voies de chauffage (203) et en fermant la direction A de la vanne à trois voies de chauffage (203), la pompe à eau de chauffage (204) fonctionne, et le réchauffeur à combustion d'hydrogène (201) est dans le mode d'arrêt ;
en réponse au fait que la pile galvanique à pile à combustible fonctionne, et T106 < Tac, la VCU commande la pompe à eau de la pile galvanique (104) pour qu'elle entre dans l'état débranché, en ouvrant la direction AB de la vanne à trois voies de chauffage (203) et en fermant la direction C de la vanne à trois voies de chauffage (203), la pompe à eau de chauffage (204) fonctionne, et le réchauffeur à combustion d'hydrogène (201) est dans le mode de fonctionnement ;
en réponse au fait que la pile galvanique à pile à combustible fonctionne, T106 < Tac et T106 < T207, la VCU commande la pompe à eau de la pile galvanique (104) pour qu'elle entre dans l'état de fonctionnement, en fermant la direction C de la vanne à trois voies de chauffage (203) et en ouvrant la direction AB de la vanne à trois voies de chauffage (203), la pompe à eau de chauffage (204) fonctionne, et le réchauffeur à combustion d'hydrogène (201) est dans le mode de fonctionnement ;
dans le mode normal de climatisation, le BMS commande la direction AC de la vanne à trois voies de la batterie (304) pour qu'elle soit ouverte et l'extrémité B de la vanne à trois voies de chauffage (203) pour qu'elle soit fermée, en réponse au fait que la température de la batterie est inférieure à une certaine valeur *Tbat1,* le BMS commande la vitesse de rotation de la pompe à eau de la batterie (302) pour qu'elle se modifie de façon linéaire d'une certaine valeur, et en réponse au fait que la température de la batterie est supérieure à une certaine valeur *Tbat2,* la batterie est refroidie par la réfrigération du climatiseur, le BMS commande la direction *BC* de la vanne à trois voies de la batterie (304) pour qu'elle soit ouverte et l'extrémité A de la vanne à trois voies du chauffage (203) pour qu'elle soit fermée, et la pompe à eau de la batterie (302) se trouve dans un état de fonctionnement à vitesse de rotation maximale.

8. Procédé de gestion thermique pour le véhicule électrique hybride à pile à combustible selon la revendication 4, dans lequel, en réponse au fait que le système de gestion thermique pour le véhicule électrique hybride à pile à combustible est commandé pour entrer dans le mode normal de refroidissement :
la pile galvanique à pile à combustible et la batterie (305) sont toutes deux réchauffées, et le climatiseur n'a pas besoin d'air chaud, la VCU commande la direction AB de la vanne à trois voies de chauffage (203) pour qu'elle soit ouverte et l'extrémité C de la vanne à trois voies de chauffage (203) pour qu'elle soit fermée ; la pompe à eau de chauffage (204) ne fonctionne pas ;
contrôle la vitesse de rotation de la pompe à eau de la pile galvanique (104) et la vitesse de rotation du ventilateur de refroidissement (102) sur la base du fonctionnement ou non de la pile galvanique (105) et de la température signalée par le capteur de température de la pile galvanique (106) ; le BMS commande la direction AC de la vanne à trois voies de la batterie (304) pour qu'elle soit ouverte et l'extrémité B de la vanne à trois voies de chauffage (203) pour qu'elle soit fermée ; et
en réponse au fait que la température de la batterie est inférieure à une certaine valeur *Tbat1,* le BMS commande la vitesse de rotation de la pompe à eau de la batterie (302) pour qu'elle se modifie de façon linéaire d'une certaine valeur, et en réponse au fait que la température de la batterie est supérieure à une certaine valeur *Tbat2,* le système de gestion de la batterie (BMS) commande la direction BC de la vanne à trois voies de la batterie (304) pour qu'elle soit ouverte et l'extrémité A de la vanne à trois voies de chauffage (203) pour qu'elle soit fermée, et la pompe à eau de la batterie (302) se trouve dans l'état de fonctionnement à vitesse de rotation maximale.

9. Véhicule, comprenant :
un système de gestion thermique pour un véhicule électrique hybride à pile à combustible selon l'une quelconque des revendications 1-3 ;
une mémoire configurée pour stocker au moins un programme, dans lequel, lorsque l'au moins un programme est exécuté par au moins un processeur dans le système de gestion thermique pour le véhicule électrique hybride à pile à combustible, l'au moins un processeur met en œuvre le procédé de gestion thermique pour le véhicule électrique hybride à pile à combustible selon l'une quelconque des revendications 4-8.

10. Support de stockage lisible par ordinateur, stockant un programme informatique, dans lequel le programme met en œuvre le procédé de gestion thermique pour le véhicule électrique hybride à pile à combustible selon l'une quelconque des revendications 4-8 lorsqu'il est exécuté par l'au moins un processeur.
